Europäisches Patentamt

European Patent Office

Office européen des brevets

(19)

(11) **EP 1 255 226 B1**

(12) **EUROPÄISCHE PATENTSCHRIFT**

| | |
|---|---|
| (45) Veröffentlichungstag und Bekanntmachung des Hinweises auf die Patenterteilung:<br>**02.04.2003 Patentblatt 2003/14** | (51) Int Cl.⁷: **G06T 7/20** |

(21) Anmeldenummer: **01110850.3**

(22) Anmeldetag: **04.05.2001**

(54) **Verfahren zur Bewegungserkennung aus einer Folge von digitalisierten Bildern**

Method for motion recognition from a sequence of digital images

Méthode de détection de mouvement à partir d'une séquence d'images numériques

| | |
|---|---|
| (84) Benannte Vertragsstaaten:<br>**AT BE CH CY DE DK ES FI FR GB GR IE IT LI LU MC NL PT SE TR**<br>Benannte Erstreckungsstaaten:<br>**AL LT LV MK RO SI** | (72) Erfinder: **Bollinger, Thomas**<br>**56564 Neuwied (DE)** |
| (43) Veröffentlichungstag der Anmeldung:<br>**06.11.2002 Patentblatt 2002/45** | (74) Vertreter: **Rupp, Christian, Dipl.-Phys. et al**<br>**Mitscherlich & Partner,**<br>**Patent- und Rechtsanwälte,**<br>**Postfach 33 06 09**<br>**80066 München (DE)** |
| (73) Patentinhaber: **Compushack production electronic GmbH**<br>**56564 Neuwied (DE)** | (56) Entgegenhaltungen:<br>**EP-A- 0 615 245        EP-A- 0 811 951**<br>**US-A- 5 471 239** |

## Beschreibung

Die vorliegende Erfindung betrifft ein Verfahren zum Erkennen einer Bewegung innerhalb eines bestimmten Bildbereichs zweier digitalisierter Bilder und ein Kamerasystem zur Aufnahme von digitalisierten Bildern mit einer Vergleichseinrichtung zur Durchführung dieses Verfahrens.

Für Livepräsentationen im Internet, aber auch für die Sicherheitstechnik werden verstärkt digitale Kamerasysteme eingesetzt. Der Vorteil dieser Systeme liegt zum einen in dem digitalen Datenformat, das direkt über das Internet oder Intranet verbreitet und archiviert werden kann, und zum anderen in der weitaus geringeren Störanfälligkeit gegenüber der analogen Videotechnik. Ein herkömmliches Videoband verliert mit jedem Abspielvorgang an Qualität und ist nur mit viel Aufwand über viele Jahre zu archivieren. Außerdem unterliegen die Abspielgeräte einem hohen Verschleiß und somit hohen Wartungskosten.

Eine Vielzahl der digitalen Kamerasysteme liefert die Videodaten in Form einer Folge von komprimierten Einzelbildern nach dem JPEG-Standard (Motion JPEG, Joint Photographic Experts Group). Die JPEG Kompression kann je nach Qualitätsanforderung verschiedene Kompressionsraten erzielen. So werden Kompressionen auf 10% der ursprünglichen Datenmenge erzielt, die für den Anwender kaum sichtbar sind; selbst Kompressionen auf 5% erzielen noch eine sehr gute Bildqualität. Durch Hochleistungscomputer, die permanent die ankommenden Videodaten auf Veränderungen überprüfen und nur veränderte Bildsequenzen archivieren, wird das Datenaufkommen weiter reduziert.

Die herkömmlichen Bewegungserkennungssysteme vergleichen Pixel für Pixel aufeinanderfolgende Bilder, und entscheiden je nach Maß der Bildveränderung, ob eine Objektveränderung und somit eine Bewegung oder Beleuchtungsveränderung stattgefunden hat. Der Nachteil dieses Verfahrens ist jedoch, daß diese mathematische Operation aufgrund der großen Datenmenge von unkomprimierten Bildern sehr viel Arbeitsspeicher und sehr viel Prozessorleistung benötigt, um die Operation in einer akzeptablen Zeit durchführen zu können. So müssen herkömmliche Systeme, beispielsweise fiir ein Standbild in einer Auflösung von 640 x 480 Bildpunkten in 24 Bit Farbtiefe, zwei Bilder mit je 921kByte Daten vergleichen. Die hierfür notwendige Rechenleistung kann nur von entsprechend teuren Hochleistungssystemen in Realzeit bewältigt werden.

Die Aufgabe der vorliegenden Erfindung ist somit, ein Verfahren zum Erkennen einer Bewegung innerhalb eines bestimmten Bildbereichs zweier digitalisierter Bilder und ein Kamerasystem zur Durchführung dieses Verfahrens bereitzustellen, bei denen eine Verringerung des Rechenaufwands bei der Vergleichsoperation erreicht wird.

Diese Aufgabe wird durch ein Verfahren zum Erkennen einer Bewegung innerhalb eines bestimmten Bildbereichs zweier digitalisierter Bilder gemäß den beigefügten Ansprüchen 1 und 2 und ein Kamerasystem gemäß dem beigefügten Anspruch 10 gelöst.

Zum Erkennen einer Bewegung werden von einer räumlichen Umgebung, die beispielsweise auf Bewegungsveränderungen überwacht werden soll, Bilder (z.B. permanent oder in bestimmten Zeitabständen) aufgenommen und digitalisiert.

Liegen diese Bilder als Farbinformationen (z.B. RGB- oder Y, Cb, Cr-Darstellung nach CCIR 601) vor, dann werden diese Bilder zunächst in Segmente mit einer bestimmten Größe unterteilt. Die Segmente werden dann in den Frequenzraum transformiert, wobei jedes Segment für sich in eine eigene Frequenzraumdarstellung transformiert wird. Zur Bewegungserkennung werden die Beträge eines bestimmten Frequenzanteils jeweils einer Frequenzraumdarstellung entsprechender Segmente der beiden Bilder miteinander verglichen und dann eine Bewegung erkannt, wenn die Differenz der Beträge der Frequenzanteile einen bestimmten Wert überschreitet.

Der Vorteil dieses Verfahrens besteht darin, daß die beiden Bilder nicht mehr Pixel für Pixel miteinander verglichen werden müssen. Gemäß der vorliegenden Erfindung wird lediglich eine relevante Information eines Segmentes jeweils miteinander verglichen, was zur Bewegungserkennung völlig ausreichend ist. Somit können zur Bewegungserkennung kostengünstige Kamera- und Computersysteme eingesetzt werden.

Liegen diese Bilder in einem bestimmten Datenformat als codierte Darstellung im Frequenzraum vor, dann entfällt die rechenintensive Transformierung. Dabei werden die digitalisierten Bilder in eine Frequenzraumdarstellung dekodiert, wobei die Bilder in Segmente mit einer bestimmten Größe unterteilt sind und jedes Segment für sich in einer eigenen Frequenzraumdarstellung vorliegt. Zur Bewegungserkennung werden auch bei diesem Verfahren die Beträge eines bestimmten Frequenzanteils jeweils einer Frequenzraumdarstellung entsprechender Segmente der beiden Bilder miteinander verglichen und dann eine Bewegung erkannt, wenn die Differenz der Beträge der Frequenzanteile einen bestimmten Wert überschreitet.

Dieses Verfahren hat den Vorteil, daß die zeitintensive Transformation der Farbinformationen in einen Frequenzraum entfällt. Somit wird weitere Rechenzeit eingespart, da viele Kamerasysteme bereits die Bilder in dem bestimmten Datenformat bereitstellen.

Die vorliegende Erfindung findet vorteilhafterweise in Kamera- oder Computersystemen Anwendung, die das erfindungsgemäße Verfahren durchführen.

Vorteilhafte Ausgestaltungen der vorliegenden Erfindung sind in den jeweiligen Unteransprüchen wiedergegeben.

Besonders vorteilhaft läßt sich die vorliegende Erfindung auf digitalisierte Bilder anwenden, die im JPEG-Datenformat vorliegen, da die jeweilgen Segmente bereits in der Frequenzdarstellung vorliegen. Dadurch entfällt die rechenintensive Transformation in den Frequenzraum.

Zum Vergleich werden die Frequenzanteile der Segmente miteinander verglichen, die die mittlere Helligkeit der Schwarz-Weiß Informationen des jeweiligen Segmentes enthalten. Das sind bei der Frequenzraumdarstellung die Frequenzanteile, die den Gleichspannungsanteil der Helligkeitsinformationen des jeweiligen Segmentes enthalten.

Zur feineren Abstufung können auch die Frequenzanteile miteinander verglichen werden, die die mittlere Helligkeit der Farbinformationen des jeweiligen Segmentes enthalten. Das sind die Frequenzanteile, die zusätzlich den Gleichspannungsanteil der Farbvektoren des jeweiligen Segmentes enthalten.

Für den Vergleich werden zwei Bilder miteinander verglichen. Je nach Auswahl des Vergleichsbildes können verschiedene Bildveränderungen wahrgenommen werden.

So können beispielsweise zwei aufeinanderfolgende Bilder für den Vergleich herangezogen werden. Bei einem Vergleich mit dem Vorgängerbild werden somit ausschließlich Bewegungen erkannt. Fährt z.B. ein Auto auf einen Parkplatz, so wird ausschließlich das Einparken und das Aussteigen des/der Fahrers/in als Bewegung erkannt, nicht aber das später bewegungslose abgestellte Fahrzeug. Dieser Modus ist für oft wechselnde Objekte und ständig veränderte Beleuchtungsverhältnisse sehr interessant, da sich dieser Algorithmus an die neue Umgebung anpaßt und ausschließlich Veränderungen aufzeichnet.

Eine weitere Möglichkeit für den Vergleich ist der Vergleich eines Bildes mit einem Referenzbild. Bei einem Vergleich mit einem Referenzbild können nicht nur Bewegungen sondern auch permanente Veränderung (statische Bildveränderung) zur Ursprungsszene (Referenzszene, die durch das Referenzbild gegeben ist) erkannt werden. So würde das geparkte Auto permanent als Hellikeitsunterschied (Bildunterschied) in der Berechnung auffallen.

Vorteilhafterweise besteht ein Segment aus 8 x 8 Bildpunkten.

Wird eine Bewegung erkannt, so kann beispielsweise ein akustisches und/oder optisches Alarmsignal ausgegeben werden.

Die vorliegende Erfindung wird nachfolgend Anhand bevorzugter Ausführungsbeispiele unter Bezug auf die beigefügten Zeichnungen näher erläutert, in denen zeigen

Figur 1 ein Ablaufdiagramm, das den Ablauf einer Kodierung nach dem JPEG-Verfahren aufzeigt,

Figur 1a die Umrechnung eines Segments in einen Vektor,

Figur 2a bis 2e ein Beispiel für den erfindungsgemäßen Vergleich zweier Bilder, und

Figur 3 eine schematische Darstellung des erfindungsgemäßen Kamerasystems.

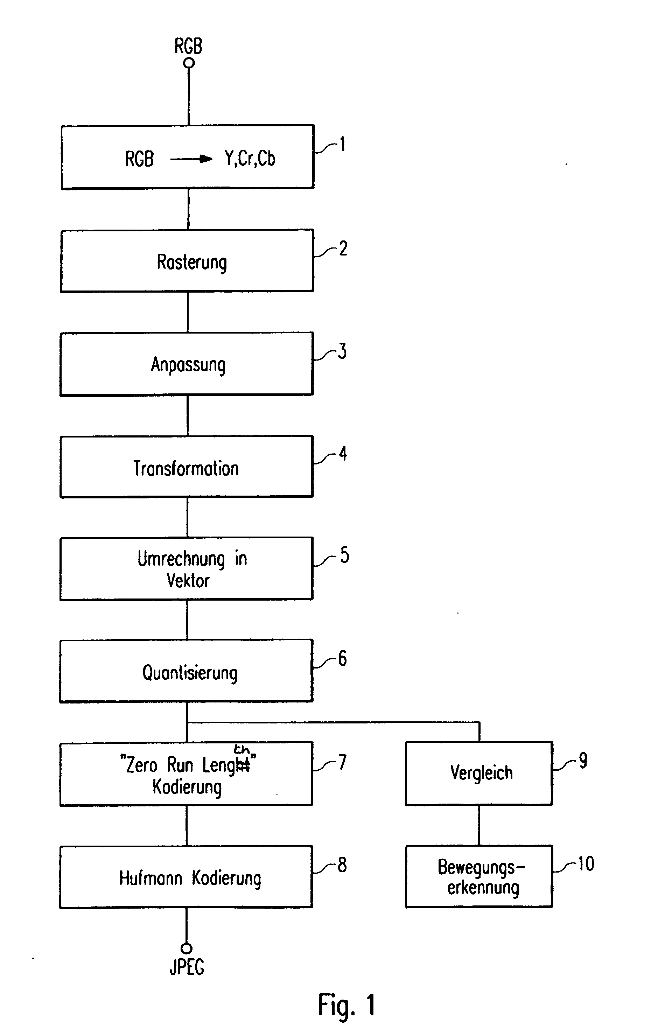

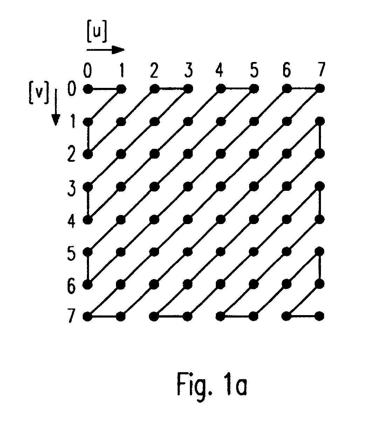

Anhand von Fig. 1 wird nachfolgend der bekannte Ablauf der Kodierung nach dem JPEG-Standard erläutert.

JPEG ist die Abkürzung für "Joint Photographic Experts Group", ein Zusammenschluß von nominierten Experten mit dem Ziel, Standards für die Kompression und das Kodieren von digitalen Standbildern zu erarbeiten. Der offizielle Name dieser Expertengruppe lautet "ISO/IEC JTC1 SC29 Working Group 1" und Ihr wohl bekanntester Standard IS 10918-1 (ITU-T T.81) wird in Verbindung mit der Dateiformatspezifikation von der Firma C-Cube allgemein als JPEG Standard bezeichnet. Für den JPEG Standard existieren viele Erweiterungen wie z.B. die "progressive" und "hierarchical compression " die jedoch für die vorliegende Erfindung nicht vorausgesetzt und verwendet werden. Das nachfolgend beschriebene Verfahren basiert auf der sogenannten "sequentiellen Baseline Kompression".

Der JPEG Standard wurde von der Firma C-Cube spezifiziert und ermöglicht den plattformunabhängigen Austausch von Standbildern, die nach dem JPEG-Standard komprimiert wurden (JPEG-Datei). Eine JPEG-Datei besteht aus mehreren Teilen, die durch vorangestellte Marker identifiziert werden. Diese Bestandteile enthalten die für die Dekompression notwendigen Quantisierungs- und Huffmantabellen, Informationen über die Bildgröße, Auflösung und Rasterung des Originalbildes sowie die komprimierten Bilddaten.

Die sogenannte Basis der Bildkompression nach dem JPEG-Standard kann in 8 Blöcke aufgeteilt werden, die in der Fig. 1 veranschaulicht werden und im wesentlichen folgende Aufgaben übernehmen:

Beim ersten Schritt 1 erfolgt eine Umrechnung der RGB (Rot, Grün, Blau) Farbkomponenten in das von CCIR 601 (Comite consultatif international des radiocommunications) festgelegte Format Y, Cr, Cb wie folgt:

$$\begin{pmatrix} Y \\ Cb \\ Cr \end{pmatrix} = \begin{pmatrix} 0{,}299 & 0{,}587 & 0{,}114 \\ -0{,}1687 & -0{,}3313 & 0{,}5 \\ 0{,}5 & -0{,}4187 & -0{,}0813 \end{pmatrix} * \begin{pmatrix} R \\ G \\ B \end{pmatrix} + \begin{pmatrix} 0 \\ 128 \\ 128 \end{pmatrix}$$

Die Y-Komponente ist an die Wahrnehmung des Menschen angepaßt und entspricht dem natürlichen Helligkeitsempfinden des menschlichen Auges. Cr, Cb repräsentieren zwei Farbvektoren, die den Farbton und deren Sättigung bestimmen.

Der zweite Schritt 2 umfaßt die Rasterung (Sampling). Die einzelnen Komponenten können in verschieden feinen Rastern erfaßt werden. So ist es z.B. üblich die Farbkomponenten (Cr,Cb) in einem gröberen Raster als das Helligkeitssignal zu erfassen, da das menschliche Auge über wesentlich feinere Wahrnehmung fiir die Helligkeit verfügt.

Der dritte Schritt 3 führt eine Anpassung des Wertebereichs durch. Der Wertebereich der einzelnen Komponenten wird von [0 bis 255] auf [-128 bis +127] durch die Subtraktion von 128 verlagert. Das ist notwendig, um die Farbwerte in eine für die diskrete Kosinus-Transformation geeignete Form zu bringen.

Mit dem vierten Schritt 4 erfolgt die Segmentierung und diskrete Kosinus-Transformation. Die diskrete Kosinus-Transformation errechnet aus einem Segment eines Bildes (üblicherweise ein Pixelblock aus 8 x 8 Pixel) die resultierenden spektralen Frequenzanteile. So führt ein Pixelblock (Segment) mit feinen Strukturen zu hohen Frequenzanteilen und ein Pixelblock mit groben oder keinen Strukturen zu geringen oder keinen spektralen Frequenzen. Die FDCT (Forward Discrete Cosine Transformation) ist allgemein wie folgt mathematisch definiert:

$$F(u,v) = \frac{C(u,v)}{4} * \sum_{x=0}^{7} \sum_{y=0}^{7} f(x,y) * \cos(\frac{2*x+1}{16} * u * \pi) * \cos(\frac{2*y+1}{16} * v * \pi)$$

wobei

    x, y die Koordinaten eines Bildpunktes (Pixels) innerhalb eines untransformierten Segments angibt,
    u, v die Koordinaten des jeweiligen Funktionswertes innerhalb eines Segments in der Frequenzraumdarstellung angibt,
    f(x, y) den Wert des jeweiligen Farbvektors Y, Cb, Cr mit den Koordinaten (x, y) angibt, und
    C(u,v) = 1/2 wenn u = v = 0, sonst 1.

Für ein Segment, das aus 8 x 8 Bildpunkten besteht gilt: x, y = 0...7 und u, v = 0...7.

Sind die Farbvektoren Y, Cb, Cr jeweils beispielsweise mit einer Auflösung von 8 Bit gegeben, so kann der jeweilige Wert f(x,y) einen Wert zwischen 0 und 255 annehmen.

Mit der Fourier-Transformation werden die einzelnen Segmente vom sogenannten Ortsraum bzw. Zeitraum in den Frequenzraum transformiert. Die Darstellung im Frequenzraum gibt Auskunft über die auftretenden Frequenzanteile und deren Amplitude (Signalgröße) in den jeweiligen Segmenten enthaltenen Signale.

Der fünfte Schritt 5 führt eine Umrechnung in einen linearen Vektor aus. Durch die diskrete Kosinus-Transformation entsteht ein 8 x 8 Block Segment), der nach dem in Fig. 1a gezeigten Schema in einen linearen Vektor bestehend aus 64 Werten umgerechnet wird. Die Umrechnung beginnt in der oberen linken Ecke mit den Koeffizienten u[0] und v[0], wonach die einzelnen Koeffizienten in einem Zick-Zack Schema zu einem neuen linearen Vektor mit 64 Werten zusammengesetzt werden. Der neu gewonnene Vektor enthält alle spektralen Frequenzanteile des jeweiligen 8 x 8-Pixel-Segments. Die Frequenzanteile sind aufsteigend ab dem Index 0 sortiert.

So enthält der Index 0 den Gleichspannungsanteil (DC Anteil) des gesamten Segments, was der mittleren Helligkeit dieses Blockes entspricht, und der Index 64 den höchsten Frequenzanteil. So beinhaltet ein Bild mit feinen Strukturen und sehr vielen Details hohe Frequenzanteile und Bilder mit geringer Struktur wenig spektrale Frequenzen.

Die Fourier-Transformation wird für jeden Farbvektor separat durchgeführt. Somit wird für jeden Farbvektor Y, Cb, Cr jeweils ein linearer Vektor erzeugt.

Mit dem sechsten Schritt 6 erfolgt eine Quantisierung. Die Quantisierung übernimmt die wesentliche Kompression des Bildes. In dieser Stufe werden die 64 spektralen Frequenzanteile durch einen Quantisierungsvektor, der wiederum aus 64 Einträgen besteht, dividiert. Das Ergebnis dieser Division wird gerundet und ist somit auf einen ganzzahligen Wert beschränkt. Die Quantisierung entfernt oder dämpft die hohen Frequenzanteile des Bildes, was mit der Reduzierung von Details im Bild gleichzusetzen ist. Das menschliche Auge kann grobe Strukturen wesentlich besser wahrnehmen als feine Strukturen, und so kann man mit einem kleinen visuellen Verlust die hohen Frequenzanteile einsparen. Wie stark letztendlich ein Vektor quantisiert wird, hängt von dem gewünschten Grad der Kompression ab. So erzielen Quantisierungsvektoren mit großen Zahlenwerten eine hohe Kompression bei gleichzeitigem Verlust von Detailschärfe und Quantisierungsvektoren mit geringen Zahlenwerten eine geringe Kompression bei guter Detailschärfe.

Der siebte Schritt 7 führt eine sogenannte "Zero Run Length"-Kodierung durch. Je nach Grad der Kompression und in Abhängigkeit des Bildinhaltes fallen viele Frequenzanteile auf den Wert Null zurück, die durch die "Zero Run Length"-Kodierung maximal zusammengefaßt werden. So werden aufeinanderfolgende Nullen innerhalb des Vektors mit einem Wiederholungszähler erfaßt und das frühzeitige Ende eines Blockes durch (0,0) markiert. Das frühzeitige Ende eines Blockes ist dann erreicht, wenn alle höheren Indizes des Vektors den Wert Null aufweisen.

Der achte Schritt 8 führt eine Kodierung (z.B. nach Huffman-Algorithmus) durch. Mit Hilfe der Huffman-Kodierung werden häufig auftretende Bitfolgen oder Bitkombinationen mit einem neuen Zahlenkode versehen, der weitaus kürzer ist und somit weniger Speicherplatz benötigt. Bitfolgen, die jedoch selten in dem Datenstrom vorkommen, erhalten in der Regel einen längeren Zahlenkode. Die Huffman Kodierung der "Baseline" JPEG Kompression verfügt noch über weitere Besonderheiten, deren Erläuterung für das erfindungsgemäße Verfahren der partiellen Bewegungserkennung jedoch nicht notwendig ist.

Der JPEG-Standard wird detailliert beispielsweise in dem Artikel "Multimedia-Datenformate: JPEG-Bilddatenkompression", Dietmar Baumstark, 1995, http://i31www.ira.uka.de/~semin94/02_JPEG/beschrieben.

Nachfolgend wird das erfindungsgemäße Verfahren erläutert, das mit sehr viel geringerem mathematischen Aufwand nicht nur Bewegung, sondern auch die Position der Bewegung in einer Folge von komprimierten Bildern, die beispielsweise nach dem JPEG-Standard komprimiert wurden, erkennen kann. Mit dieser partiellen Bewegungserkennung ist man nun in der Lage, Bildveränderungen in einem überwachungsrelevanten Bereich von einer Bewegung in einem nicht relevanten Bereich zu unterscheiden. Dies reduziert wiederum das Datenaufkommen, da nur Veränderungen im überwachungsrelevanten Bereich aufgezeichnet werden. Zusätzlich kann eine Bewegung im überwachungsrelvanten Bereich als Alarmsignal ausgewertet werden.

Aus der Betrachtung der Bildkompression nach dem JPEG-Standard geht hervor, daß jeweils ein Segment mit 8 x 8 Pixeln (Bildpunkten) durch die Kosinus-Transformation in jeweils eine Frequenzdarstellung umgerechnet wurde. Es entsteht ein neuer 8 x 8 Block, diesmal jedoch mit den spektralen Frequenzanteilen für diesen Bildbereich. Die spektrale Frequenz mit dem Index [0,0] entspricht mathematisch dem Gleichspannungsanteil, also der Energie des Bildbereiches, welche gleichbedeutend mit der gemittelten Helligkeit dieses Segments für die jeweilige Farbkomponente (Y, Cb, Cr) ist. Man spricht hier von den sogenannten DC Koeffizienten (Gleichspannungskoeffizienten), die bereits in berechneter, jedoch komprimierter Form Bestandteil eines JPEG Bildes sind. Die zu vergleichende Datenmenge wird durch diese Vereinfachung auf 1/64 der original Bilddaten reduziert.

Eine weitere Vereinfachung entsteht durch die Vernachlässigung der Farbkomponenten Cr, Cb. Die Y Komponente entspricht der Schwarz-Weiß Wahrnehmung des menschlichen Auges und ist für eine Bewegungserkennung vollkommen ausreichend. Zur Vereinfachung der Bewegungserkennung gemäß der vorliegenden Erfindung wird vorteilhafterweise nur das Helligkeitssignal (Y-Signal) der Gleichspannungskomponente verwendet. Dadurch ergibt sich wiederum eine Datenreduzierung auf 1/3.

Für die Bewegungserkennung aus einer Folge von komprimierten Bildern nach dem JPEG-Standard werden nicht alle Stufen eines JPEG-Decoders benötigt. Besonders wichtig hierbei ist, daß die sehr zeitaufwendige Inverse Kosinustransformation (Schritt 5) und Dequantisierung (Schritt 6) nicht notwendig ist. Die ausschließlich benötigen DC Koeffizienten stehen bereits nach der Huffman- und "Zero Run Length"-Deodierung (Schritte 8 und 7 aus Fig. 1) zur Verfügung.

Vor dem Dekomprimieren der jeweiligen JPEG-Datei (d.h. des nach dem JPEG-Standard komprimierten Bildes) müssen die in der Datei enthaltenen einzelnen Marker ausgewertet werden. Die durch die Marker bezeichneten Teile der JPEG-Datei enthalten die für die Dekompression notwendigen Huffmankodes, Informationen über die Bildgröße, Auflösung und Rasterung des Originalbildes sowie die komprimierten Bilddaten.

Für eine möglichst effiziente Huffman-Dekodierung wird üblicherweise eine Hashtabelle errechnet. Da jedoch innerhalb JPEG Bildfolge fortlaufend die gleichen Huffmankodes verwendet werden, ist diese Berechnung der Hashtabelle nur einmal notwendig, was wiederum Rechenzeit einspart.

Der Datenstrom der JPEG-Datei wird mit Hilfe sehr effizienter Hashing Algorithmen Huffman dekodiert.

Die "Zero Run Length" Dekodierung" rechnet die komprimierten Nullfolgen zurück. Nach diesen Operation stehen die 64 Koeffizienten für jedes Segment zur Verfügung. Hierbei ist zu beachten, daß der Koeffizient [0,0] (DC Koeffizient) immer als Offset zum vorherigen DC Koeffizienten kodiert ist.

$$DC_{[n+1]}=DC_{[n]}+\text{Offset}$$

Wir bereits beschrieben, entsprechen die Koeffizienten [0,0] der Y-Komponente dem mittleren Helligkeitswert eines Segments eines Bildes, der ausschließlich für die Berechnung benötigt wird. Während der Dekodierung der JPEG-Datei (JPEG-Bild) werden nacheinander die Koeffizienten [0,0] der Y- Komponente abgespeichert. Die Koeffizienten [1-63] sowie alle Koeffizienten weiterer Komponenten (in der Regel Cr, Cb) durchlaufen zwar die Dekodierungsstufen, werden für die Berechnung aber nicht benötigt und müssen nicht gespeichert werden; dadurch wird der Speicherbedarf für das erfindungsgemäße Verfahren sehr klein gehalten. Für ein Bild in der Auflösung von 320x240 Bildpunkten ergeben sich somit nur 1200 (40x30) DC Koeffizienten.

Liegen die Daten im RGB-Format vor, müssen ebenfalls nicht alle Stufen (Schritte 1 bis 6 ) der Kodierung zum JPEG-Format durchgeführt werden. Der erfindungsgemäße Vergleich kann hier bereits nach Schritt 4 (Transformation) durchgeführt werden, da die Daten der Segmente hier bereits in der Frequenzdarstellung vorliegen.

Jede sichtbare erkennbare Bewegung führt zu einer Bildveränderung, die sich wiederum in dem Helligkeitswert eines Segments eines Bildes ermitteln läßt. Vergleicht man nun die DC-Koeffizienten (Helligkeitswerte) von aufeinanderfolgenden Bildern, so kann man die Bereiche ermitteln, in denen eine Helligkeitsveränderung und somit eine Bildveränderung und Bewegung stattgefunden hat. Je nach Auswahl des Vergleichsbildes, kann man beispielsweise bei einem Vergleich mit dem jeweiligen Vorgängerbild, ausschließlich Bewegungen erkennen. Fährt z.B. ein Auto auf einen Parkplatz, so wird ausschließlich das Einparken und das Aussteigen des/der Fahrers/in als Bewegung erkannt, nicht aber das später bewegungslose abgestellte Fahrzeug. Dieser Modus ist für oft wechselnde Objekte und ständig veränderte Beleuchtungsverhältnisse sehr interessant, da sich dieser Algorithmus an die neue Umgebung anpaßt und ausschließlich Veränderung aufzeichnet.

Bei einem Vergleich mit einem Referenzbildsbild wird nicht nur Bewegung sondern auch permanente Veränderung zur Ursprungsszene erkannt. So würde das geparkte Auto permanent als Helligkeitsunterschied (Bildunterschied) in der Berechnung auffallen und einen Alarm auslösen.

Eine Bewegung wird erkannt, wenn der Unterschied zwischen zwei Helligkeitswerten einen bestimmten Schwellwert erreicht hat. Die Lage der Bewegung innerhalb eines Bildes ist durch die Lage des jeweiligen Segments bzw. der jeweiligen Segmente, für die eine Bewegung erkannt wird, genau bestimmt.

Der Vergleich kann dabei für das gesamte Bild oder auch nur für bestimmte eingeschränkte Bildbereiche aktiviert bzw. deaktiviert werden.

Der zeitliche Abstand der aufeinanderfolgenden Bilder kann dabei frei gewählt werden. So können mit dem erfindungsgemäßen Verfahren, je nach zeitlichem Abstand zwischen dem aktuellen Bild und dem Vergleichsbild, gezielt langsame und schnelle Bewegungen oder aber auch statische Veränderungen erkannt werden.

Die Lage jedes DC Koeffizienten ist durch seinen Index und die Bildgröße sowie durch die Rasterung des Bildes, d.h. die Größe der Bildsegmente, eindeutig bestimmt. Es ist durchaus denkbar, daß man den Vergleich der DC-Koeffizienten auf einen überwachungsrelevanten Bereich reduziert. Dies ist besonders für Überwachungsbereiche sinnvoll, in denen unvermeidlich Bewegung stattfindet, wie z.B. durch eine Straße, die im Sichtbereich des Kamera Objektives liegt.

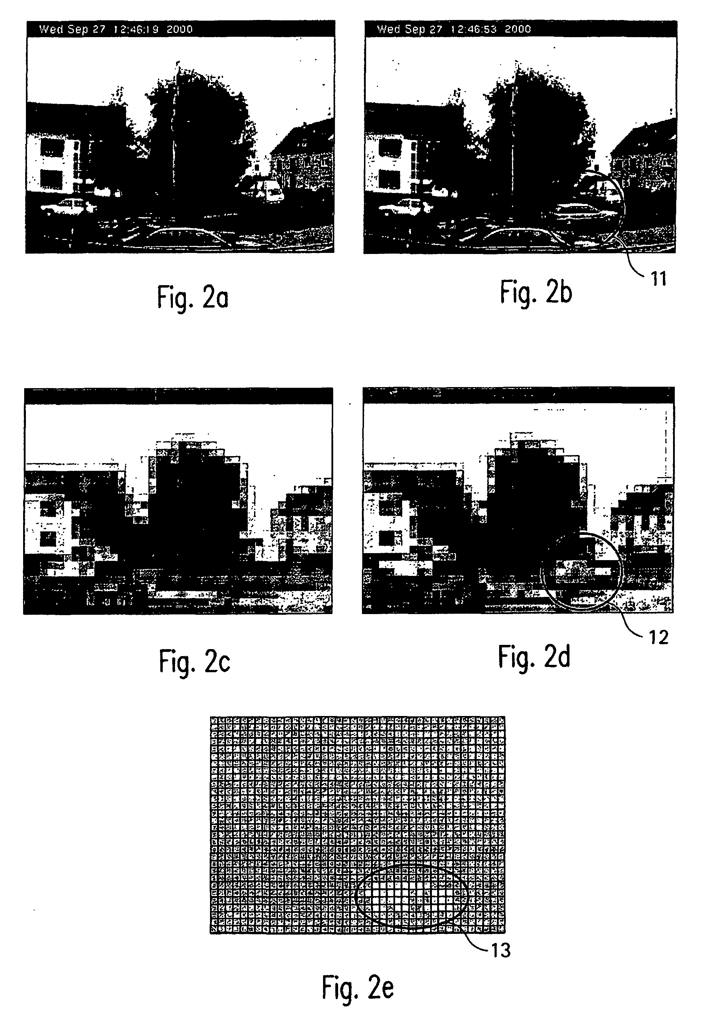

Die Bildveränderung, die mit dem erfindungsgemäßen Verfahren als Bewegung erkannt wird, wird nachfolgend anhand der Figuren 2a...2d erläutert.

Figur 2b zeigt eine detaillierte Aufnahme (Bild) einer Umgebung mit einem fahrenden Auto 11, welches in Figur 2a nicht zu sehen ist. Die Figuren 2c und 2d zeigen Aufnahmen derselben Umgebung, jedoch nur als Helligkeitswerte (DC-Koeffiziennten) der jeweiligen Segmente, die als Quadrate zu erkennen sind. In der Figur 2d ist das Auto 12 als Veränderung der Helligkeitswerte gegenüber Fig. 2c erkennbar.

Figur 2e zeigt eine Schwellwert-Darstellung, wobei der hellere Bereich 13 der Bildveränderung entspricht, die durch das fahrende Auto erzeugt wird.

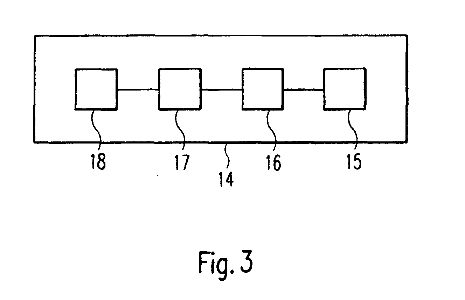

Figur 3 zeigt eine schematische Darstellung des erfindungsgemäßen Kamerasystems 14, mit einer Kamera 15 zum Aufnehmen nach dem JPEG-Standard. Die Bilder werden dabei entweder direkt live von der Kamera 15 gelesen und ausgewertet oder von der Kamera 15 auf einem Datenträger 16 (z.B. Festplatte, Speicherchip, etc.) zwischengespeichert.

Die Vergleichseinrichtung 17 nimmt die zum Vergleich notwendige Dekodierung (Schritte 8 und 7) vor und vergleicht zwei Bilder auf Helligkeitsunterschiede. Bei Erkennen eines Helligkeitsunterschiedes wird durch die Alarmvorrichtung 18 beispielsweise ein akustischer oder optischer Alarm ausgegeben.

Das erfindungsgemäße Verfahren zur Bewegungserkennung findet bevorzugt Anwendung bei blockweise frequenztransformierten Bildern, die nach dem JPEG-Standard komprimiert wurden. Dieses Format wird von vielen digitalen Kamerasystemen verwendet, da es den benötigten Speicherplatz zur Archivierung der Bilddaten und die notwendige Bandbreite der Übertragungskanals minimiert.

Solche Kamerasysteme stellen die Bilder direkt als JPEG-Format zur Verfügung. Diese Kamerasysteme verwenden dabei handelsübliche Bauelemente, die die von der eigentlichen Kamera gelieferten Bilder im RGB-Format direkt in das JPEG-Format umwandeln und in dem JPEG-Format zur Verfügung stellen. Somit kann die Bewegungserkennung sehr kostengünstig aus dem Vergleich zweier JPEG-Bilder unter Verwendung von handelsüblichen Bauelementen realisiert werden.

Das Verfahren verwendet gezielt bereits berechnete Koeffizienten des JPEG Formats, womit der mathematischen Aufwand zur Bewegungserkennung drastisch reduziert wird. Die Bewegungserkennung kann durch diese Vereinfachung auf Prozessoren mit weniger Rechenleistung verlagert werden. Dies ermöglicht eine bereits in der Kamera integrierte Bewegungserkennung, die für bestimmte Bildbereiche sogar aktiviert oder deaktiviert werden kann.

Das erfindungsgemäße Verfahren setzt voraus, daß mindestens zwei aufeinanderfolgende Bilder mit dem gleichen Sichtbereich unter den gleichen Belichtungsverhältnissen aufgenommen werden. Dabei handelt es sich in vorteilhafter Weise um digitalisierte Bilder nach dem JPEG-Standard, die mit dem gleichen JPEG-Kompressionsgrad aufgenommen werden. Die meisten handelsüblichen Kamerasysteme erfüllen bereits diese Voraussetzungen.

Der besondere Vorteil des beschrieben Verfahrens liegt in der sehr effizienten und ressourcensparenden Berechnung von Bildveränderungen und somit der Ermittlung von Bewegung. Der Algorithmus greift auf bereits berechnete Bilddaten des JPEG-Formats zurück. Der Algorithmus benötigt lediglich einen minimalen JPEG-Dekoder und kann auf die besonders rechenintensive Dequantisierung und inverse Kosinustransformation des Standard-JPEG Dekoders verzichten. Diese Vereinfachung ist möglich, da man eine Bildveränderung bereits an der Helligkeit eines Bildes in einer weitaus geringeren Auflösung (1/64) erkennen kann. Diese mathematische Vereinfachung ermöglicht kompakte, intelligente Kamerasysteme mit einem Minimum an Datenaufkommen und einer bisher nicht möglich gewesenen kostengünstigeren Ausstattung.

Somit wird durch das erfindungsgemäße Verfahren ein minimaler mathematischer und daraus resultierend technischer Aufwand zur Bewegungserkennung ermöglicht, der sich aus dem JPEG-Standard ergibt. Dieser Algorithmus kann daher auf Prozessoren mit geringer Leistung in Echtzeit ausgeführt werden, was bisher nur Hochleistungscomputern vorbehalten war.

Auch wenn die vorliegende Erfindung unter Bezugnahme auf das JPEG-Format beschrieben wurde, läßt sie sich gleichermaßen auf alle anderen Daten anwenden, bei denen die Daten in der Frequenzdarstellung vorliegen, aus der sich der DC-Koeffizient, der der mittleren Helligkeit des jeweiligen Bildsegments entspricht, entnehmen läßt.

## Patentansprüche

1. Verfahren zum Erkennen einer Bewegung innerhalb eines bestimmten Bildbereichs zweier digitalisierter Bilder, aufweisend die folgenden Schritte:

   - Unterteilen der digitalisierten Bilder in Segmente mit einer bestimmten Größe,
   - Transformieren (4) der Segmente in den Frequenzraum, wobei jedes Segment für sich in eine eigene Frequenzraumdarstellung transformiert wird,
   - Vergleichen (9) des Betrags eines bestimmten Frequenzanteils jeweils einer Frequenzraumdarstellung entsprechender Segmente der beiden Bilder miteinander, und
   - Erkennen des Vorliegens einer Bewegung (10), wenn die Differenz der Beträge der Frequenzanteile einen bestimmten Wert überschreitet, und
   - Ermittlung der Position der Bewegung anhand der Position des Segments, in dem der Wert überschritten wurde, innerhalb des Bildes.

2. Verfahren zum Erkennen einer Bewegung innerhalb eines bestimmten Bildbereichs auf der Grundlage von zwei digitalisierten Bildern, die in einem bestimmten Datenformat als codierte Darstellung im Frequenzraum vorliegen, aufweisend die folgenden Schritte:

   - Dekodierung (8, 7) der digitalisierten Bilder in eine Frequenzraumdarstellung, wobei die Bilder in Segmente mit einer bestimmten Größe unterteilt sind und jedes Segment für sich in einer eigenen Frequenzraumdarstellung vorliegt,
   - Vergleichen (9) des Betrags eines bestimmten Frequenzanteils jeweils einer Frequenzraumdarstellung entsprechender Segmente der beiden Bilder miteinander,
   - Erkennen des Vorliegens einer Bewegung (10), wenn die Differenz der Beträge der Frequenzanteile einen bestimmten Wert überschreitet, und
   - Ermittlung der Position der Bewegung anhand der Position des Segments, in dem der Wert überschritten wurde, innerhalb des Bildes.

3. Verfahren nach einem der Ansprüche 1 oder 2,
   **dadurch gekennzeichnet,**
   **dass** der zeitliche Abstand der beiden miteinander zu vergleichenden Bilder einstellbar ist.

**4.** Verfahren nach einem der vorhergehenden Ansprüche,
**dadurch gekennzeichnet,**
**dass** der Schritt des Vergleichens (9) auf einen Teilbereich der miteinander zu vergleichenden Bilder beschränkbar ist.

**5.** Verfahren nach einem der vorhergehenden Ansprüche,
**dadurch gekennzeichnet,**
**daß** die Frequenzanteile miteinander verglichen werden, die die mittlere Helligkeit der Schwarz-Weiß Informationen des jeweiligen Segmentes enthalten.

**6.** Verfahren gemäß einem der Ansprüche 1 bis 4,
**dadurch gekennzeichnet,**
**daß** die Frequenzanteile miteinander verglichen werden, die die mittlere Helligkeit der Farbinformationen des jeweiligen Segmentes enthalten.

**7.** Verfahren gemäß einem der Ansprüche 1 bis 6,
**dadurch gekennzeichnet,**
**daß** zwei aufeinanderfolgende Bilder miteinander verglichen werden.

**8.** Verfahren gemäß einem der Ansprüche 1 bis 6,
**dadurch gekennzeichnet,**
**daß** ein Bild mit einem Ursprungsbild verglichen wird.

**9.** Verfahren gemäß einem der Ansprüche 1 bis 8,
**dadurch gekennzeichnet,**
**daß** bei Erkennen einer Bewegung ein Alarmsignal ausgegeben wird.

## Claims

**1.** Method for identifying a movement within a specific image area of two digitised images having the following steps:

- dividing the digitised images into segments of a specific size,
- transforming (4) the segments into the frequency space, wherein each segment is transformed individually into its own frequency space representation,
- comparing (9) the sum of a specific frequency quota in each case of segments of the two images corresponding to a frequency space representation with one another and
- identifying the existence of a movement (10) if the difference between the sums of the frequency quotas exceeds a specific value and
- detecting the position of the movement using the position within the image of the segment in which the value has been exceeded.

**2.** Method for identifying a movement within a specific area of an image on the basis of two digitised images which exist in the frequency space in a specific data format as a coded representation, having the following steps:

- decoding (8, 7) the digitised images into a frequency space representation, wherein the images are divided into segments of a specific size and each segment exists individually in its own frequency space representation,
- comparing (9) the sum of a specific frequency quota in each case of segments of the two images corresponding to a frequency space representation with one another,
- identifying the existence of a movement (10) if the difference between the sums of the frequency quotas exceeds a specific value and
- detecting the position of the movement using the position within the image of the segment in which the value has been exceeded.

**3.** Method according to one of claims 1 or 2, **characterised in that** the chronological interval between the two images to be compared with one another can be set.

**4.** Method according to one of the preceding claims, **characterised in that** the step of comparing (9) can be limited to a partial area of the images to be compared with one another.

5. Method according to one of the preceding claims, **characterised in that** the frequency quotas containing the average brightness of the black and white information of the respective segment are compared with one another.

6. Method according to one of claims 1 to 4, **characterised in that** the frequency quotas containing the average brightness of the colour information of the respective segment are compared with one another.

7. Method according to one of claims 1 to 6, **characterised in that** two successive images are compared with one another.

8. Method according to one of claims 1 to 6, **characterised in that** an image is compared with an original image.

9. Method according to one of claims 1 to 8, **characterised in that** when a movement is identified an alarm signal is output.

**Revendications**

1. Procédé de détection d'un mouvement à l'intérieur d'une zone d'image déterminée de deux images numérisées, comportant les étapes suivantes consistant à :

  - subdiviser les images numérisées en segments d'une dimension déterminée,
  - transformer (4) les segments en espace fréquentiel, chaque segment étant transformé en soi en une représentation d'espace fréquentiel propre,
  - comparer (9) la valeur d'une partie des fréquences déterminée de segments correspondant chacun à une représentation d'espace séquentiel pour chacune des deux images, et
  - détecter la présence d'un mouvement (10) lorsque la différence entre les valeurs des parties de fréquences dépasse une valeur déterminée, et
  - déterminer la position du mouvement par rapport à la position du segment, dans lequel la valeur a été dépassée, à l'intérieur de l'image.

2. Procédé de détection d'un mouvement à l'intérieur d'une zone d'image déterminée sur la base de deux images numérisées qui existent dans un format de données déterminé en tant que représentation codée dans l'espace fréquentiel, comportant les étapes suivantes consistant à :

  - décoder (8, 7) les images numérisées dans une représentation d'espace fréquentiel, les images étant subdivisées en segments d'une dimension déterminée et chaque segment existant en soi dans une représentation d'espace fréquentiel propre,
  - comparer (9) la valeur d'une partie des fréquences déterminée de segments correspondant chacun à une représentation d'espace séquentiel pour chacune des deux images, et
  - détecter la présence d'un mouvement (10) lorsque la différence entre les valeurs des parties de fréquences dépasse une valeur déterminée, et
  - déterminer la position du mouvement par rapport à la position du segment, dans lequel la valeur a été dépassée, à l'intérieur de l'image.

3. Procédé selon l'une des revendications 1 ou 2, **caractérisé en ce que** l'intervalle de temps entre les deux images à comparer entre elles est réglable.

4. Procédé selon l'une des revendications précédentes, **caractérisé en ce que** l'étape de la comparaison (9) peut être limitée à une sous-zone des images à comparer entre elles.

5. Procédé selon l'une des revendications précédentes, **caractérisé en ce que** des parties de fréquences sont comparées entre elles, lesquelles contiennent la luminosité moyenne des informations noir et blanc du segment correspondant.

6. Procédé selon l'une des revendications 1 à 4, **caractérisé en ce que** les parties de fréquences sont comparées entre elles, lesquelles contiennent la luminosité moyenne des informations couleur du segment correspondant.

7. Procédé selon l'une des revendications 1 à 6, **caractérisé en ce que** deux images successives sont comparées entre elles.

8. Procédé selon l'une des revendications 1 à 6, **caractérisé en ce qu'**une image est comparée avec une image d'origine.

9. Procédé selon l'une des revendications 1 à 8, **caractérisé en ce qu'**il est délivré un signal d'alarme lors de la détection d'un mouvement.

RGB

RGB ⟶ Y,Cr,Cb — 1

Rasterung — 2

Anpassung — 3

Transformation — 4

Umrechnung in Vektor — 5

Quantisierung — 6

"Zero Run Lenght" Kodierung — 7

Vergleich — 9

Hufmann Kodierung — 8

Bewegungs- erkennung — 10

JPEG

Fig. 1

Fig. 1a

Fig. 2a

Fig. 2b

Fig. 2c

Fig. 2d

Fig. 2e

Fig. 3